# EUROPÄISCHE PATENTSCHRIFT

(11) **EP 1 859 138 B1**
(45) Veröffentlichungstag und Bekanntmachung des Hinweises auf die Patenterteilung: **20.05.2009**
(21) Anmeldenummer: 06707699.2
(22) Anmeldetag: 11.01.2006
(51) Int. Cl.: F02D 21/08, F02M 25/07

(54) **VERFAHREN ZUR RÜCKFÜHRUNG EINES TEILSTROMES AN ABGAS ZU EINEM VERBRENNUNGSMOTOR EINES KRAFTFAHRZEUGES**
METHOD FOR RECIRCULATING A SUB-STREAM OF EXHAUST GAS TO AN INTERNAL COMBUSTION ENGINE OF A MOTOR VEHICLE
PROCEDE POUR RECYCLER UN ECOULEMENT PARTIEL DE GAZ D'ECHAPPEMENT D'UN MOTEUR A COMBUSTION INTERNE DANS UN VEHICULE

(30) Priorität: 18.03.2005 DE 102005012644
(43) Veröffentlichungstag der Anmeldung: 28.11.2007
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/EP2006/050145
(87) Internationale Veröffentlichungsnummer: WO 2006/097366

(56) Entgegenhaltungen:
- EP-A- 1 420 159
- EP-A- 1 493 907
- EP-A- 1 498 594
- DE-A1- 10 041 579
- DE-C2- 19 680 305
- PATENT ABSTRACTS OF JAPAN Bd. 1999, Nr. 13, 30. November 1999 (1999-11-30) -& JP 11 229973 A (ISUZU MOTORS LTD), 24. August 1999 (1999-08-24)
- PATENT ABSTRACTS OF JAPAN Bd. 2000, Nr. 23, 10. Februar 2001 (2001-02-10) -& JP 2001 152855 A (HONDA MOTOR CO LTD), 5. Juni 2001 (2001-06-05)
- PATENT ABSTRACTS OF JAPAN Bd. 1995, Nr. 04, 31. Mai 1995 (1995-05-31) -& JP 07 004321 A (MITSUBISHI MOTORS CORP), 10. Januar 1995 (1995-01-10)
- PATENT ABSTRACTS OF JAPAN Bd. 015, Nr. 049 (M-1078), 6. Februar 1991 (1991-02-06) -& JP 02 283848 A (MAZDA MOTOR CORP), 21. November 1990 (1990-11-21)

## Beschreibung

Die Erfindung bezieht sich auf ein Verfahren zur Rückführung eines Teilstromes an Abgas zu einem Verbrennungsmotor eines Kraftfahrzeuges. Die Erfindung bezieht sich ferner auf eine Vorrichtung zur Durchführung des Verfahrens.

Verfahren zur Rückführung von Teilströmen an Abgasen zu einem Verbrennungsmotor sind bekannt. In der DE-PS 196 80 305 C2 wird ein Abgasrezirkulationssystem für einen Innenverbrennungsmotor beschrieben. Bei diesem System wird ein Teil der von dem Motor produzierten Abgase von einer Auslassleitung des Motors in eine Einlassleitung des Motors rezirkuliert, wobei das Abgasrezirkulationssystem hinter der Auslassleitung des Motors eine Rezirkulationsleitung aufweist. Diese Rezirkulationsleitung splittet sich in eine Bypassleitung und eine Kühlerleitung mit eingebautem Kühler auf. Die Bypassleitung und die Kühlerleitung weisen an ihrem Ende jeweils ein Ventil auf, hinter denen die Bypassleitung und die Kühlerleitung wieder zu einer einheitlichen Leitung zusammengefasst werden. Über diese gelangt dann der Teilstrom an Abgas wieder in den Motor. Bei diesem Verfahren ist jedoch nachteilig, dass ein relativ großer Bauraum benötigt wird, der oftmals nicht vorhanden ist.

Eine ähnliche Vorrichtung beschreiben auch die JP 11229973 A und die JP 2001152855 A, wobei bei letzterer für die Abgasrückführung eine erste und eine zweite Teilstromleitung vorgesehen sind und die zweite Teilstromleitung hinter einem Katalysator angeschlossen ist und zum Kühlen der abgezweigten Abgasmenge einen Kühler aufweist.

Der Erfindung liegt daher die Aufgabe zugrunde, ein Verfahren zur Rückführung eines Teilstromes an Abgas zu einem Verbrennungsmotor eines Kraftfahrzeuges zu schaffen, bei dem nur ein relativ geringer Bauraum erforderlich ist. Der Erfindung liegt ferner die Aufgabe zugrunde, eine Vorrichtung zur Durchführung des Verfahrens zu schaffen.

Die der Erfindung zugrunde liegende Aufgabe wird durch ein Verfahren zur Rückführung eines Teilstromes an Abgas zu einem Verbrennungsmotor eines Kraftfahrzeuges gelöst, bei dem der Teilstrom hinter dem Abgasaustritt des Verbrennungsmotors entweder über eine erste Teilstromleitung, einem dieser nachgeschalteten ersten Ventil, einem ersten Ventilaustritt und einer Rückführleitung dem Verbrennungsmotor zugeführt wird oder zunächst zusammen mit der restlichen Menge an Abgas durch eine Auspuffleitung geleitet wird und anschließend durch eine, an die Auspuffleitung angeschlossene zweite Teilstromleitung einem dieser nachgeschalteten zweiten Ventil, einem zweiten Ventilaustritt und einer Rückführleitung dem Verbrennungsmotor zugeführt wird, wobei das erste Ventil und das zweite Ventil in Abhängigkeit von den Abgasbedingungen geöffnet oder geschlossen werden, und bei welchem erfindungsgemäß die beiden Teilstromleitungen durch eine Ventileinheit geleitet werden, in welcher das erste Ventil und das zweite Ventil und ein Sensor angeordnet sind, wobei das Öffnen und das Schließen des ersten und zweiten Ventils von dem Sensor überwacht werden. Sowohl das erste Ventil als auch das zweite Ventil befinden sich in Parallelschaltung zueinander und werden im Betrieb gekühlt. Es hat sich in überraschender Weise gezeigt, dass sich das Verfahren zur Rückführung eines Teilstromes an Abgas zu einem Verbrennungsmotor eines Kraftfahrzeuges auch dann besonders einfach und vorteilhaft realisieren lässt, wenn auf die Anordnung eines Kühlers verzichtet wird. Alleine dadurch, dass die zweite Teilstromleitung eine größere Länge als die erste Teilstromleitung aufweist, wird eine vorteilhafte Kühlwirkung des Teilstromes an Abgas erreicht. Es lassen sich auch dann hervorragende Kraftstoff-Luftgemische für den Verbrennungsmotor einstellen, wenn die erforderliche Kühlleistung ausschließlich mithilfe der zweiten Teilstromleitung realisiert wird. Die Länge der zweiten Teilstromleitung wird dabei ingenieurmäßig dimensioniert.

Der Sensor sorgt dafür, dass besonders schnell auf schwankende Abgasbedingungen reagiert werden kann.

Die der Erfindung zugrunde liegende Aufgabe wird ferner durch eine Vorrichtung zur Durchführung des Verfahrens gelöst, die aus einer hinter dem Abgasaustritt des Verbrennungsmotors angeordneten ersten Teilstromleitung besteht, die mit einem ersten Ventil verbunden ist, das einen ersten Ventilaustritt aufweist, der mit einer Rückführleitung verbunden ist und die aus einer an eine Auspuffleitung angeschlossenen zweiten Teilstromleitung besteht, die mit einem zweiten Ventil verbunden ist, das einen zweiten Ventilaustritt aufweist, der mit der Rückführleitung verbunden ist, wobei ein Sensor angeordnet ist, der sowohl die Ansteuerung des ersten Ventils und des zweiten Ventils in Abhängigkeit von den Abgasbedingungen überwacht und das erste Ventil und das zweite Ventil zusammen mit dem Sensor in einer Ventileinheit angeordnet sind. Die Auspuffleitung ist ebenfalls direkt hinter dem Abgasaustritt des Verbrennungsmotors angeordnet. Am Ende des Abgasaustrittes teilt sich die Leitung in die Auspuffleitung und in die zweite Teilstromleitung. Mit dieser Vorrichtung lässt sich der Teilstrom an Abgas je nach den Abgasbedingungen allein in der, die Kühlwirkung aufweisenden zweiten Teilstromleitung in optimaler Weise kühlen, wobei gleichzeitig Bauraum eingespart werden kann, da die Platz raubende Anordnung eines Kühlers nicht erforderlich ist.

Die jeweiligen Positionen der Ventilklappen werden durch den Sensor kontinuierlich erfasst, so dass auf schwankende Abgasbedingungen relativ schnell reagiert werden kann.

Die Zusammenfassung des ersten Ventils, des zweiten Ventils und des Sensors zu einer Ventileinheit führt in besonders vorteilhafter Weise zu einer weiteren Verringerung des Bauraumes, was in der Regel in Kraftfahrzeugen gewünscht ist. Ferner eignet sich der Einsatz einer Ventileinheit vorteilhaft für eine Vorabfertigung, was den Herstellungsprozess, gegebenenfalls durch eine Serienfertigung, begünstigt.

Nach einer weiteren Ausgestaltung der Erfindung weist die Ventileinheit einen Kühlmitteleintritt und einen Kühlmittelaustritt auf. Dabei ist vorteilhaft, dass eine gemeinsame Kühlung des ersten Ventils und des zweiten Ventils mithilfe von flüssigem Kühlmittel realisiert werden kann. Als flüssiges Kühlmittel werden in der Regel Wassergemische eingesetzt. Dabei ist vorteilhaft, dass das flüssige Kühlmittel in der Ventileinheit beispielsweise durch Kühlschlangen geleitet wird und dies auf engstem Raum erfolgen kann.

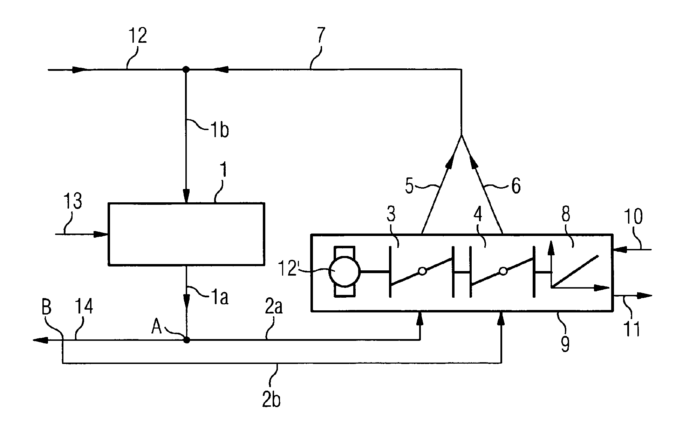

Die Erfindung wird nachfolgend anhand der Zeichnung (Fig.) näher und beispielhaft erläutert.

Fig. zeigt ein Verfahrensfließbild des Verfahrens zur Rückführung eines Teilstromes an Abgas zu einem Verbrennungsmotor eines Kraftfahrzeugs.

In Fig. ist das Verfahrensfließbild des Verfahrens zur Rückführung eines Teilstroms an Abgas zu einem Verbrennungsmotor 1 eines Kraftfahrzeuges dargestellt. Das Abgas gelangt aus dem Verbrennungsmotor 1 zunächst in den Abgasaustritt 1a. Es kann für den Verbrennungsprozess von Vorteil sein, dass das zurückgeführte Abgas hohe Temperaturen aufweist. In diesem Fall wird ein Teilstrom an Abgas an der ersten Einspeisestelle A in die erste Teilstromleitung 2a geleitet. Hinter dieser ersten Teilstromleitung 2a ist ein nachgeschaltetes erstes Ventil 3 dann geöffnet. Über das nachgeschaltete erste Ventil 3 gelangt der Teilstrom an Abgas über einen ersten Ventilaustritt 5 in eine Rückführleitung 7, die in die Gaseintrittsleitung 1b mündet. In diese Gaseintrittsleitung 1b wird zusätzlich zum Teilstrom an Abgas Luft über eine Zuführleitung 12 eingespeist. Das in der Gaseintrittsleitung 1b vorhandene Gasgemisch gelangt dann direkt in den Verbrennungsmotor 1. In den Verbrennungsmotor 1 wird zusätzlich Kraftstoff über die Kraftstoffleitung 13 zugeführt. Bei bestimmten Betriebszuständen des Verbrennungsmotors 1 ist es vorteilhafter, wenn das zurückgeführte Abgas eine geringere Temperatur und einen niedrigeren Druck aufweist. In diesem Fall wird der Teilstrom an Abgas zusammen mit der restlichen Menge an Abgas an der ersten Einspeisestelle A zunächst in eine Auspuffleitung 14 geleitet. Das erste Ventil 3 ist dabei geschlossen. Die Auspuffleitung 14 ist an einer zweiten Einspeisestelle B mit einer zweiten Teilstromleitung 2b verbunden, deren Länge größer ist als die Länge der ersten Teilstromleitung 2a. Zwischen der ersten Einspeisestelle A und der zweiten Einspeisestelle B kann in besonders vorteilhafter Weise ein Abgasturbolader (nicht dargestellt) angeordnet sein, der die Temperatur und Druckunterschiede noch vergrößert. Durch diese zweite Teilstromleitung 2b gelangt dann der Teilstrom an Abgas aus der Auspuffleitung 14 über das dann geöffnete, der zweiten Teilstromleitung 2b nachgeschaltete zweite Ventil 4 und über einen zweiten Ventilaustritt 6 in die Rückführleitung 7 und über die Gaseintrittsleitung 1b schließlich in den Verbrennungsmotor 1. Das Öffnen und Schließen des ersten Ventils 3 und des zweiten Ventils 4 in Abhängigkeit von den Abgasbedingungen wird von einem Sensor 8 überwacht. Das erste Ventil 3 und das zweite Ventil 4 sind zusammen mit dem Sensor 8 in einer Ventileinheit 9 angeordnet, die einen Kühlmitteleintritt 10 und einen Kühlmittelaustritt 11 aufweist. Der Antrieb des ersten Ventils 3 und des zweiten Ventils 4 erfolgt über einen Elektromotor 12', der ebenfalls in der Ventileinheit 9 angeordnet ist.

## Patentansprüche

1. Verfahren zur Rückführung eines Teilstromes an Abgas zu einem Verbrennungsmotor (1) eines Kraftfahrzeuges, bei dem der Teilstrom hinter dem Abgasaustritt (1a) des Verbrennungsmotors (1) entweder über eine erste Teilstromleitung (2a), einem dieser nachgeschalteten ersten Ventil (3), einem ersten Ventilaustritt (5) und einer Rückführleitung (7) dem Verbrennungsmotor (1) zugeführt wird oder zunächst zusammen mit der restlichen Menge an Abgas durch eine Auspuffleitung (14) geleitet wird und anschließend durch eine, an die Auspuffleitung (14) angeschlossene zweite Teilstromleitung (2b) einem dieser nachgeschalteten zweiten Ventil (4), einem zweiten Ventilaustritt (6) und einer Rückführleitung (7) dem Verbrennungsmotor (1) zugeführt wird, wobei das erste Ventil (3) und das zweite Ventil (4) in Abhängigkeit von den Abgasbedingungen geöffnet oder geschlossen werden,
**dadurch gekennzeichnet, dass** beide Teilströme durch eine Ventileinheit (9) geleitet werden, in welcher das erste Ventil (3), das zweite Ventil (4) und ein Sensor (8) angeordnet sind, von welchem das Öffnen und Schließen des ersten Ventils (3) und des zweiten Ventils (4) überwacht werden.

2. Vorrichtung zur Durchführung des Verfahrens nach Anspruch 1, die aus einer hinter dem Abgasaustritt (1a) des Verbrennungsmotors (1) angeordneten ersten Teilstromleitung (2a) besteht, die mit einem ersten Ventil (3) verbunden ist, das einen ersten Ventilaustritt (5) aufweist, der mit einer Rückführleitung (7) verbunden ist und die aus einer an eine Auspuffleitung (14) angeschlossenen zweiten Teilstromleitung (2b) besteht, die mit einem zweiten Ventil (4) verbunden ist, das einen zweiten Ventilaustritt (6) aufweist, der mit der Rückführleitung (7) verbunden ist,
**dadurch gekennzeichnet, dass** ein Sensor (8) angeordnet ist, der sowohl die Ansteuerung des ersten Ventils (3) und des zweiten Ventils (4) in Abhängigkeit von den Abgasbedingungen überwacht und das erste Ventil (3) und das zweite Ventil (4) zusammen mit dem Sensor (8) in einer Ventileinheit (9) angeordnet sind.

3. Vorrichtung nach Anspruch 2, bei der die Ventileinheit (9) einen Kühlmitteleintritt (10) und einen Kühlmittelaustritt (11) aufweist.

## Claims

1. Method for recirculating a partial flow of exhaust gas to an internal combustion engine (1) of a motor vehicle, in which method the partial flow downstream of the exhaust-gas outlet (1a) of the internal combustion engine (1) is either supplied to the internal combustion engine (1) via a first partial flow line (2a), a first valve (3) which is connected downstream of said first partial flow line (2a), a first valve outlet (5) and a recirculation line (7), or is firstly conducted together with the rest of the exhaust gas through an exhaust line (14) and is subsequently supplied to the internal combustion engine (1) through a second partial flow line (2b) which is connected to the exhaust line (14), a second valve (4) which is connected downstream of said second partial flow line (2b), a second valve outlet (6) and a recirculation line (7), with the first valve (3) and the second valve (4) being opened or closed as a function of the exhaust-gas conditions,
**characterized in that** both partial flows are conducted through a valve unit (9) in which the first valve (3), the second valve (4) and a sensor (8) are arranged, which sensor (8) monitors the opening and closing of the first valve (3) and of the second valve (4).

2. Device for carrying out the method according to Claim 1, which device is composed of a first partial flow line (2a) which is arranged downstream of the exhaust-gas outlet (1a) of the internal combustion engine (1) and which is connected to a first valve (3) which has a first valve outlet (5) which is connected to a recirculation line (7), and which device is composed of a second partial flow line (2b) which is connected to an exhaust line (14) and which is connected to a second valve (4) which has a second valve outlet (6) which is connected to the recirculation line (7),
**characterized in that** a sensor (8) is provided which monitors both the activation of the first valve (3) and of the second valve (4) as a function of the exhaust-gas conditions, and the first valve (3) and the second valve (4) are arranged together with the sensor (8) in a valve unit (9).

3. Device according to Claim 2, in which the valve unit (9) has a coolant inlet (10) and a coolant outlet (11).

## Revendications

1. Procédé permettant de réinjecter un flux partiel de gaz d'échappement vers un moteur à combustion interne (1) d'un véhicule automobile, procédé au cours duquel le flux partiel est ramené au moteur à combustion interne (1), après la sortie (1a) des gaz d'échappement du moteur à combustion interne (1) ou bien par l'intermédiaire d'une première conduite (2a) de flux partiel, d'une première soupape (3) montée en aval de cette dernière conduite, d'une première sortie (5) de soupape et d'une conduite de retour (7), ou bien est d'abord envoyé, en commun avec le résidu de gaz d'échappement, à travers une conduite (14) des gaz d'échappement et, ensuite, est ramené au moteur à combustion interne (1) à travers une deuxième conduite (2b) de flux partiel raccordée à la conduite (14) des gaz d'échappement, une deuxième soupape (4) montée en aval de la deuxième conduite (2b) de flux partiel, une deuxième sortie (6) de soupape et une conduite de retour (7), la première soupape (3) et la deuxième soupape (4) fermant et ouvrant en fonction des conditions propres aux gaz d'échappement, **caractérisé par le fait que** les deux flux partiels sont envoyés à travers une unité (9) à soupapes, dans laquelle sont montées la première soupape (3), la deuxième soupape (4) et un détecteur (8) qui surveille l'ouverture et la fermeture de la première soupape (3) et de la deuxième soupape (4).

2. Dispositif permettant d'exécuter le procédé selon la revendication 1 et composé, d'une part, d'une première conduite (2a) de flux partiel placée derrière la sortie (1a) des gaz d'échappement du moteur à combustion interne (1), laquelle première conduite (2a) de flux partiel est raccordée à une première soupape (3) qui a une première sortie (5) de soupape raccordée à une conduite de retour (7) et, d'autre part, d'une deuxième conduite (2b) de flux partiel raccordée à une conduite (14) des gaz d'échappement, laquelle deuxième conduite (2b) de flux partiel est raccordée à une deuxième soupape (4) qui a une deuxième sortie (6) de soupape raccordée à la conduite de retour (7), **caractérisé par le fait qu**'un détecteur (8), qui surveille, en fonction des conditions propres aux gaz d'échappement, la commande non seulement de la première soupape (3), mais aussi de la deuxième soupape (4), est disposé dans une unité (9) à soupapes et que la première soupape (3) et la deuxième soupape (4) sont montées en commun avec le détecteur (8) dans l'unité (9) de soupapes.

3. Dispositif selon la revendication 2, dans lequel l'unité (9) de soupapes comporte une entrée (10) de produit réfrigérant et une sortie (11) de produit réfrigérant.
